# FASCICULE DE BREVET EUROPEEN

(11) **EP 0 390 668 B1**
(45) Date de publication et mention de la délivrance du brevet: **18.11.1993**
(21) Numéro de dépôt: 90400829.9
(22) Date de dépôt: 27.03.1990
(51) Int. Cl.: H02G 3/04

(54) **Perfectionnements aux chemins de câbles**
Kabelrinnen
Improvements to cable ducts

(30) Priorité: 31.03.1989 FR 8904285
(43) Date de publication de la demande: 03.10.1990
(73) Titulaire: CONSTRUCTIONS ELECTRIQUES DE LA SEINE, F-92130 Issy les Molineaux (FR)
(72) Inventeur: Dufourg, Bernard, F-75006 Paris (FR)
(74) Mandataire: Behaghel, Pierre

(56) Documents cités:
- EP-A- 0 275 185
- BE-A- 571 357
- DE-B- 2 141 849

## Description

L'invention est relative aux gouttières présentant en section droite la forme d'un U à fond plat et utilisées pour supporter et guider des câbles souples, gouttières couramment désignées sous l'expression "chemins de câbles".

Les modes de réalisation connus de ces gouttières se répartissent en deux familles :
- ceux de la première famille sont des profilés constitués par des plaques perforées repliées en U,
- ceux de la seconde famille sont constitués par des treillis de fils rigides ronds croisés à angle droit et soudés à leurs points de croisement, ces treillis étant également repliés en U.

Chaque famille présente des avantages particuliers au nombre desquels on peut citer :
- pour la première, la simplicité de fabrication des gouttières, la facilité de mise en place des câbles par simple tirage, ainsi que la continuité du soutien des câbles sur toute leur longueur et que la résistance aux déformations sous charge,
- pour la seconde, la souplesse d'adaptation sur place aux changements de direction et la facilité d'entrée et de sortie des câbles même en des zones intermédiaires des gouttières.

Il existe une troisième formule permettant de cumuler certains des avantages des deux formules antérieures, formule selon laquelle les chemins de câbles sont encore constitués par un treillis plié en U et composé par des éléments allongés et rigides croisés à angle droit et assemblés en leurs points de croisement, les éléments rigides longitudinaux étant constitués par des fils ronds, et les éléments rigides transversaux étant constitués par des bandes plates pliées en U (voir le document BE-A-571 357).

L'invention concerne une version perfectionnée de cette troisième formule, pour laquelle le support des câbles est encore amélioré ainsi que leur guidage, en particulier lors de leur mise en place sur les chemins de câbles considérés.

A cet effet, les chemins de câbles du genre en question selon l'invention sont essentiellement caractérisés en ce que les bandes plates sont disposées du côté intérieur de ces chemins de câbles et les fils ronds, du côté extérieur, et en ce que les bords longitudinaux desdites bandes plates sont prolongés par des pans rabattus à 180° de façon à être juxtaposés contre les faces extérieures de ces bords.

Dans des modes de réalisation préférés, la portion médiane de chaque bande plate en section transversale est décalée par rapport à ses bords longitudinaux de façon à se trouver dans le prolongement des pans rabattus.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre en vue perspective un tronçon de chemin de câbles établi selon l'invention.

Les figures 2 et 3 montrent un tronçon d'une variante d'un tel chemin de câbles également conforme à l'invention, selon respectivement II-II figure 3 et III-III figure 2.

La figure 4 montre semblablement à la figure 3 un tronçon d'une autre variante de chemin de câbles conforme à l'invention.

Les figures 5, 6 et 7 montrent en coupe partielle d'autres détails de chemins de câbles conformes à l'invention.

D'une façon générale le chemin de câbles ou gouttière de câblage destiné à supporter et guider des fils ou câbles 1 est constitué par un treillis replié en U et composé de deux sortes d'éléments rigides allongés croisés à angle droit et assemblés mutuellement en leurs points de croisement, savoir :
- des fils ronds longitudinaux 2,
- et des bandes plates ou lattes transversales 3.

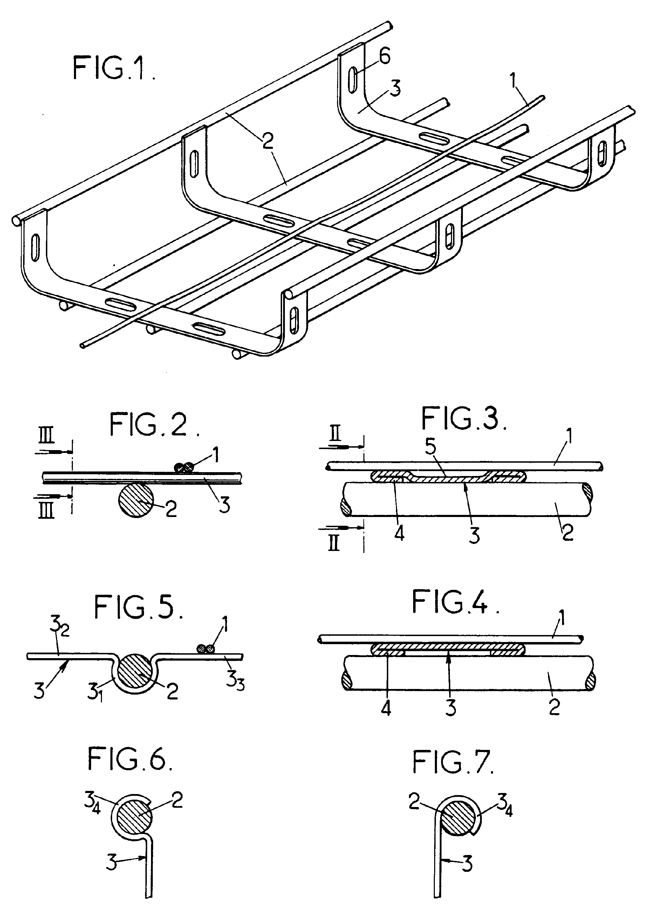

Comme bien visible sur la figure 1, les bandes plates 3 sont recourbées selon des U à fond plat qui sont disposés à l'intérieur de la gouttière.

L'assemblage mutuel de ces bandes 3 sur les fils 2 est obtenu notamment par soudage au niveau de leurs surfaces de contact mutuelles, ainsi que représenté sur les figures 1 à 4.

Cet assemblage peut également être obtenu en recourbant la bande 3 autour des fils 2 sur plus de 180° de façon à pincer ces fils ainsi que visible sur les figures 5 à 7.

La figure 5 concerne l'assemblage d'un tronçon intermédiaire 3₁ d'une bande 3, lequel tronçon est prolongé de part et d'autre par deux tronçons 3₂,3₃ situés dans le prolongement mutuel l'un de l'autre.

Cet ensemble est avantageusement agencé de façon telle que la face supérieure plane des tronçons 3₂,3₃, généralement horizontale, soit pratiquement située au niveau de la génératrice supérieure du fil rond 2 enveloppé par le tronçon 3₁ considéré, ce qui évite la présence de ressauts dans la surface de portage de la gouttière, ressauts qui sont des sources d'accrochage pour les fils 1 supportés.

Les figures 6 et 7 concernent l'assemblage d'un tronçon terminal 3₄ de la bande 3 sur le fil 2 correspondant.

L'enveloppement de ce fil 2 par ce tronçon 34 peut être assuré de façon telle que l'ouverture de la boucle de bande formée soit orientée selon une direction perpendiculaire (figure 6) ou parallèle (figure 7) à l'aile de gouttière terminée par ledit tronçon 3₄.

Les bandes 3 sont constituées par des portions de tôle.

Pour éviter la présence d'arêtes vives le long des bords longitudinaux de ces bandes, arêtes susceptibles de blesser les câbles 1, et en même temps pour augmenter la résistance mécanique des bandes 3 pour un poids donné de celles-ci, on prolonge les bords longitudinaux de ces bandes par deux pans 4 rabattus à 180' jusqu'à leur juxtaposition contre ces bords ainsi que visible sur la figure 4.

Les tranches latérales des bandes présentent alors un profil arrondi sans arête vive.

Les pans rabattus 4 sont disposés du c6té des fils 2 de façon à être appliqués jointivement contre ces fils.

Selon une variante intéressante illustrée sur la figure 3, le rabattement ci-dessus indiqué est complété en décalant transversalement la portion plate médiane 5 de la bande de façon à la placer dans le prolongement des deux pans rabattus 4 correspondants.

Cette variante présente certes l'inconvénient de réduire la surface de portage offerte aux câbles 1, mais elle présente l'avantage d'augmenter la surface de contact mutuel entre la bande 3 et les fils ronds 2 auxquels cette bande doit être assemblée.

Les bandes 3 sont avantageusement percées de lumières 6, qui sont notamment allongées selon la plus grande direction desdites bandes ainsi que visible sur la figure 1 : ces lumières 6 présentent le double avantage d'alléger les bandes et de faciliter l'accrochage des câbles 1 sur elles à l'aide d'attaches introduites dans lesdites lumières.

A titre indicatif,
- les fils ronds 2 sont en général constitués par des fils tréfilés en acier présentant un diamètre compris entre 4 et 7 mm,
- les bandes 3 sont en général constituées par des plats en acier présentant une largeur comprise entre 20 et 50 mm et une épaisseur comprise entre 0,5 et 2 mm.

En suite de quoi, et quel que soit le mode de réalisation adopté, on dispose finalement de chemins de câbles dont la constitution résulte suffisamment de ce qui précède.

Ces chemins de câbles présentent un certain nombre d'avantages par rapport à ceux antérieurement connus et notamment les suivants :
- ils sont particulièrement faciles à adapter sur place aux contours des circuits à équiper et se prêtent aisément aux entrées et sorties des câbles en des zones intermédiaires,
- ils offrent aux câbles à supporter des surfaces de soutien beaucoup plus importantes que les gouttières constituées en treillis de fils ronds,
- les portées de support et guidage qu'ils offrent aux câbles comprennent exclusivement des surfaces arrondies ou planes ne risquant pas de blesser ces câbles.

## Revendications

1. Chemin de câbles constitué par un treillis plié en U composé par des éléments allongés et rigides (2, 3) croisés à angle droit et assemblés en leurs points de croisement, les éléments rigides longitudinaux étant constitués par des fils ronds (2) et les éléments rigides transversaux étant constitués par des bandes plates (3) pliées en U, caractérisé en ce que les bandes plates (3) sont disposées du côté intérieur du chemin de câbles et les fils ronds (2), du côté extérieur et en ce que les bords longitudinaux desdites bandes sont prolongés par des pans (4) rabattus à 180° de façon à être juxtaposés contre les faces extérieures de ces bords.

2. Chemin de câbles selon la revendication 1, caractérisé en ce que la portion médiane (5) de chaque bande plate en section transversale est décalée par rapport à ses bords longitudinaux de façon à se trouver dans le prolongement des pans rabattus (4).

## Patentansprüche

1. Kabelrinne, die aus einem U-förmigen Gitter aus länglichen und starren Elementen (2, 3) besteht, die sich in einem rechten Winkel kreuzen und an ihren Kreuzungspunkten zusammengefügt sind, wobei die starren sich in Längsrichtung erstreckenden Elemente aus Drähten (2) mit rundem Querschnitt und die starren in Querrichtung verlaufenden Elemente aus flachen Bändern (3) bestehen, die U-förmig gebogen sind, dadurch gekennzeichnet, daß die flachen Bänder (3) auf der Innenseite der Kabelrinne und die runden Stäbe (2) auf der Außenseite der Rinne angeordnet sind und daß die Längsränder der Bänder durch Abschnitte (4) verlängert sind, die um 180° umgebogen sind, so daß sie gegen die äußeren Oberflächen der Ränder anliegen.

2. Kabelkanal nach Anspruch 1, dadurch gekennzeichnet, daß der im Querschnitt gesehen mittlere Abschnitt (5) der flachen Bänder in bezug auf ihre Längsränder versetzt ist, so daß er in Verlängerung der umgebogenen Abschnitte (4) verläuft.

## Claims

1. Cable tray consisting of a lattice folded into a U shape, formed by rigid elongate members (2, 3) intersecting at right angles and connected at their points of intersection, the longitudinal rigid members consisting of round rods (2) and the transverse rigid members consisting of flat strips (3) folded into a U shape, characterised in that the flat strips (3) are disposed on the inside of the cable tray and the round rods (2) on the outside, and in that the longitudinal ends of the said strips are extended by sections (4) folded back at 180° so as to be juxtaposed against the external faces of these ends.

2. Cable tray according to Claim 1, characterised in that the middle portion (5) of each flat strip, in cross section, is offset with respect to its longitudinal edges so as to be situated in line with the folded-back sections (4).
